# EUROPÄISCHE PATENTANMELDUNG

(11) **EP 1 967 920 A1**
(43) Veröffentlichungstag der Anmeldung: **10.09.2008**
(21) Anmeldenummer: 07004687.5
(22) Anmeldetag: 07.03.2007
(51) Int. Cl.: G05B 19/042, G05B 19/05, G06F 9/445

(54) **Verfahren zur Durchführung von Softwareupdates in FPGA-basierte Automatisierungsgeräte**

(71) Anmelder: SIEMENS AKTIENGESELLSCHAFT, 80333 München (DE)
(72) Erfinder: Amrhein, Armin, 92245 Kümmersbruck (DE)

(57) **Zusammenfassung**

Es wird ein Verfahren zum Betrieb eines Automatisierungsgeräts (10) angegeben, wobei in einem dem Automatisierungsgerät (10) zugeordneten Speicher (14) zumindest zwei unabhängig lösch- und beschreibbare Segmente (16, 18) gebildet sind und wobei in einem ersten Segment (16) ein Bootlader (20) vorgehalten wird, der mit Verfügbarkeit einer Betriebsspannung für das Automatisierungsgerät (10) durch eine davon umfasste Verarbeitungsvorrichtung, insbesondere einen sog. FPGA (12), ausgeführt wird, wobei unter Kontrolle des Bootladers (20) eine Verfügbarkeit einer evtl. Aktualisierung eines durch die Verarbeitungsvorrichtung ausführbaren Steuerungsprogramms (22) überprüft und ggf. in das zweite Segment (18) geladen und anschließend zur Ausführung aktiviert wird und wobei ohne Verfügbarkeit einer solchen Aktualisierung des zweite Segment (18) auf das Vorhandensein eines gültigen Steuerungsprogramms (22) überprüft und ein solches zur Ausführung aktiviert wird.

## Beschreibung

Die Erfindung betrifft ein Verfahren zum Betrieb eines Automatisierungsgeräts gemäß dem Oberbegriff des Anspruchs 1. Speziell bezieht sich die Erfindung auf ein Verfahren zum Betrieb eines Automatisierungsgeräts, bei dem ein Steuerungsprogramm mit Hilfe eines sogenannten Bootladers automatisch aktualisierbar ist und zur Ausführung durch die Verarbeitungsvorrichtung bereit gestellt wird.

Der Begriff "Automatisierungsgerät" umfasst dabei sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter, Kommunikationseinrichtungen und Ähnliches, wie sie zur oder bei der Steuerung, Regelung und/oder Überwachung technologischer Prozesse, z.B. zum Umformen oder Transportieren von Material, Energie oder Information etc., eingesetzt werden oder einsetzbar sind, wobei insbesondere über geeignete technische Einrichtungen, wie z.B. Sensoren oder Aktoren, Energie aufgewandt oder gewandelt wird.

In vielen Lösungen der Elektronik kommen als Verarbeitungsvorrichtung aufgrund ihrer Flexibilität sogenannte FPGAs zum Einsatz. Inzwischen können solche Lösungen, ohne weitere Logik und Prozessoren, umfangreiche und komplexe Aufgaben übernehmen. Entsprechend bezieht sich auch die Erfindung in einer bevorzugten Ausführungsform auf ein Betriebsverfahren für ein Automatisierungsgerät der oben genannten Art - im Folgenden kurz auch nur als "Gerät" bezeichnet -, bei dem als Verarbeitungsvorrichtung ein solcher FPGA fungiert.

Um Fehlerbereinigungen und Funktionserweiterungen möglichst ohne Eingriff in das jeweilige Gerät vornehmen zu können, ist eine Update-Funktion, also eine Funktion zur Aktualisierung des durch die Verarbeitungsvorrichtung ausgeführten oder ausführbaren Steuerungsprogramms, wünschenswert, mittels derer also ein neues Steuerungsprogramm - im Falle eines FPGA als Verarbeitungsvorrichtung auch als FPGA Programm oder allgemein kurz als Programm bezeichnet - in den Speicher bzw. einen diesen umfassenden Speicherbaustein geschrieben werden kann und von dort aus in die Verarbeitungsvorrichtung bzw. der FPGA geladen wird oder aus dem diese bzw. dieser sich selbst lädt.

Aktuelle FPGAs können ihren Code eingeständig aus einem remanenten Speicherbaustein laden. Mikrocontroller werden heute meist dann eingesetzt, wenn kein weiterer remanenter Speicherbaustein für den FPGA eingesetzt werden soll, weil für den FPGA ein solcher ohnehin vorzusehen ist. Darüber hinaus werden zum Laden eines FPGA Mikrocontroller eingesetzt, um einen Speicherbaustein auszulesen und das Programm dann über eine Schnittstelle in den FPGA zu laden. Das Update des FPGA Programms erfolgt über eine Schnittstelle des Mikrocontrollers. Aus einem Massenspeicher oder über einen Computer wird das Programm an den Mikrocontroller übertragen, der es dann seinerseits in einen remanenten Speicherbaustein, der auch elektrisch löschbar ist, ablegt. Eine weitere Möglichkeit ist der Einsatz von zwei Speicherbausteinen und einem Multiplexer, wie in der DE 100 34 405 A1 beschrieben.

Ausgehend von diesem Stand der Technik liegt der Erfindung als eine Aufgabe vor allem zugrunde, ein Betriebsverfahren anzugeben, bei dem nur ein einziger Speicherbaustein und kein zusätzlicher Mikrocontroller oder dergleichen benötigt wird.

Diese Aufgabe wird erfindungsgemäß mit den Merkmalen des Anspruchs 1 gelöst. Dazu ist bei einem Verfahren zum Betrieb eines Automatisierungsgeräts , welches eine Verarbeitungsvorrichtung zur Ausführung von Programmcodeanweisungen zumindest eines Bootladers und eines Steuerungsprogramms und einen elektrisch löschbaren Speicher umfasst, vorgesehen, dass der Speicher in mindestens zwei Segmente - ein erstes und ein zweites Segment - unterteilt ist, dass das erste Segment Programmcodeanweisungen für den Bootlader umfasst, dass der Bootlader in die Verarbeitungsvorrichtung geladen und ausgeführt wird, dass der Bootlader eine Verfügbarkeit eventueller Aktualisierungen für das Steuerungsprogramms prüft und dass der Bootlader im Falle einer solchen Verfügbarkeit das aktualisierte Steuerungsprogramm in das zweite oder ein weiteres Segment lädt. Wenn hier und im Folgenden von einem ersten und zweiten und ggf. weiteren Segment die Rede ist, bezieht sich dies nicht auf eine Adressierungssicht und ist einzig zur sprachlichen Unterscheidung mehrerer Segmente vorgesehen.

Damit ermöglicht die vorliegende Erfindung ein Update eines Steuerungsprogramms mit einem in nur einem Speicherbaustein gebildeten Speicher und ohne einen Mikrocontroller einzusetzen. Der elektrisch löschbare Speicher des Speicherbausteins wird in mindestens zwei Segmente, die im Folgenden zur Unterscheidung als erstes und zweites Segment bezeichnet werden, eingeteilt. Diese Segmente sind unabhängig voneinander lösch-und beschreibbar. Eines der Segmente, z.B. das erste Segment, enthält ein statisch vorhandenes, also nicht update-fähiges Programm. Dieses Programm wird hier zur Unterscheidung von einem ansonsten durch die Verarbeitungsvorrichtung ausführbaren Steuerungsprogramm als Bootlader bezeichnet. Das oder jedes weitere Segment, also insbesondere das zweite Segment und ein evtl. drittes, viertes, usw. Segment sind für Steuerungsprogramme, insbesondere FPGA Programme, vorgesehen, die die eigentliche Funktion der Verarbeitungsvorrichtung bzw. des FPGA definieren. Der Bootlader wird immer nach dem Einschalten einer jeweiligen Versorgungsspannung oder auch aufgrund eines Signals zum Zurücksetzen (Reset) in die Verarbeitungsvorrichtung bzw. den FPGA geladen. Der Bootlader stellt die Funktionalität eines "Update Managements" entsprechend dem Ansatz gemäß der Erfindung bereit, deren Aufgabe es ist, auf ein möglicherweise bereitstehendes Programmupdate zu prüfen und ein solches Update ggf. durchzuführen. Anschließend wird das Steuerungs- bzw. FPGA Programm in die Verarbeitungsvorrichtung bzw. den FPGA geladen und gelangt dort, ggf. im Anschluss an ein separat ausgelöstes Startsignal, zur Ausführung.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Eine besonders günstige Möglichkeit, eine Verfügbarkeit evtl. Updates, also eventueller Aktualisierungen für das Steuerungsprogramm, zu erkennen, besteht darin, dass der Bootlader während einer vorgegebenen oder vorgebbaren Zeitspanne mindestens eine Schnittstelle der Verarbeitungsvorrichtung im Hinblick auf ein Signal bezüglich einer Verfügbarkeit eventueller Aktualisierungen für das Steuerungsprogramms überwacht. Die Schnittstelle kann zur kommunikativen Verbindung mit einem Programmiergerät oder dergleichen vorgesehen sein. Alternativ kann die oder eine andere Schnittstelle auch einen Zugang zu einem Bussystem ermöglichen. Wenn über die Schnittstelle von einer an die Schnittstelle mittel- oder unmittelbar angeschlossenen Quelle ein aktualisiertes Steuerungsprogramm zur Verfügung gestellt wird, wird dies von dem Bootlader erkannt, insbesondere an einem Signal, das die Verfügbarkeit eines aktualisierten Steuerungsprogramms anzeigt. Das Signal kann dabei ein spezielles Datum, z.B. ein erstes Datum, insbesondere ein Datum eines sogenannten Programmheaders, einer Mehrzahl von von dem Steuerungsprogramm umfassten Daten sein.

Zum Übernehmen eines aktualisierten Steuerungsprogramms in den Bereich des Automatisierungsgeräts ist bevorzugt vorgesehen, dass der Bootlader im Falle eines Signals bezüglich einer Verfügbarkeit eventueller Aktualisierungen für das Steuerungsprogramm das zweite oder ein weiteres Segment elektrisch löscht, über die Schnittstelle Daten zur Aktualisierung des Steuerungsprogramms empfängt und die Daten in das zweite oder ein weiteres Segment überträgt. Auf diese Weise bleibt in jedem Fall der Bootlader in dem ersten Segment erhalten. Auch wenn also bei der Übertragung des aktualisierten Steuerungsprogramms Fehler auftreten, ist über den Bootlader jederzeit erneut das aktualisierte Steuerungsprogramm ladbar, bis die Übertragung fehlerfrei erfolgt ist.

Wenn der Bootlader im Anschluss an eine erfolgreiche Übertragung der Daten zur Aktualisierung des Steuerungsprogramms in das zweite oder ein weiteres Segment das jeweilige Segment als das aktuell gültige Steuerungsprogramm enthaltend markiert, kann ein derart markiertes Segment leicht ausgewählt werden, um das darin enthaltene Steuerungsprogramm zur Verarbeitungsvorrichtung zu übertragen und dort zur Ausführung zu bringen.

Wenn der Bootlader nach Verstreichen der vorgegebenen oder vorgebbaren Zeitspanne, während derer die oder jede Schnittstelle im Hinblick auf ein Signal bezüglich einer Verfügbarkeit eventueller Aktualisierungen für das Steuerungsprogramms überwacht wird, das zweite oder jedes weitere Segment auf eine Verfügbarkeit eines gültigen Steuerungsprogramms überprüft und im Falle einer solchen Verfügbarkeit das jeweilige Segment als das aktuell gültige Steuerungsprogramm enthaltend markiert, kann, wenn keine Aktualisierung des oder eines Steuerungsprogramms vorgesehen ist, ein bereits im Speicher verfügbares Steuerungsprogramm zur Ausführung ausgewählt werden.

Aus dem Segment, das - entweder nach einer Aktualisierung des Steuerungsprogramms oder nach einer Überprüfung eines bereits verfügbaren Steuerungsprogramms - als das aktuell gültige Steuerungsprogramm enthaltend markiert ist, ist das jeweilige Steuerungsprogramm in die Verarbeitungsvorrichtung ladbar und dort ausführbar.

Besonders bevorzugt ist vorgesehen, dass im Falle eines Speichers mit mehr als zwei Segmenten das jeweilige Segment zum Laden des Steuerungsprogramms durch den Bootlader anhand von Informationen ausgewählt wird, die sich anhand von über die Schnittstelle empfangenen, von dem Steuerungsprogramm umfassten oder mit dem Steuerungsprogramm assoziierten Daten ergeben. Auf diese Art und Weise kann mit den zur Aktualisierung des Steuerungsprogramms übermittelten Daten direkt das jeweilige Speichersegment zur Aufnahme des aktualisierten Steuerungsprogramms ausgewählt werden. Damit lässt sich günstigerweise z.B. sicherstellen, dass bei einer Mehrzahl von in dem Speicher vorgehaltener unterschiedlicher Steuerungsprogramme niemals eine aktualisierte Version eines ersten Steuerungsprogramm eine bereits verfügbare Version eines anderen Steuerungsprogramms überschreibt. Die zur Auswahl des jeweiligen Segments vorgesehenen Informationen werden insbesondere durch eine geeignete Projektierung, also z.B. eine Definition solcher Informationen mittels eines zur Erstellung, Wartung oder Modifizierung solcher Steuerungsprogramme vorgesehenen, z.B. auf einem Programmiergerät ablaufenden Entwicklungsumgebung, vorgegeben.

Weiter bevorzugt ist vorgesehen, dass im Falle eines Speichers mit mehr als zwei Segmenten aus einer evtl. Mehrzahl von Segmenten, die als ein aktuell gültiges Steuerungsprogramm enthaltend markiert sind, eines der Segmente durch an die Verarbeitungsvorrichtung angelegte Signale ausgewählt wird und das jeweilige Steuerungsprogramm in die Verarbeitungsvorrichtung geladen und ausgeführt wird. Dann ist jedes der gültigen Steuerungsprogramme individuell abruf- und zur Ausführung auswählbar ohne dabei die grundsätzlich Abruf- und Ausführbarkeit evtl. weiterer in den Speicher vorgehaltener Steuerungsprogramme zu beeinträchtigen.

Einleitend ist bereits ausgeführt worden, dass gemäß einer besonders bevorzugten Ausführungsform der Erfindung vorgesehen ist, dass als Verarbeitungsvorrichtung zur Ausführung von Programmcodeanweisungen zumindest eines Bootladers und eines Steuerungsprogramms ein FPGA oder FPGA-Baustein fungiert, wobei die mit dieser Ausführungsform verbundenen Vorteile vor allem aus der Leistungsfähigkeit und Flexibilität solcher FPGA-Baustein resultieren.

Die Erfindung betrifft neben dem vorstehend skizzierten und nachfolgend näher beschriebenen Betriebsverfahren auch ein Computerprogramm mit durch einen Computer ausführbaren Programmcodeanweisungen zur Implementierung eines solchen Betriebsverfahrens, also insbesondere ein Computerprogramm, mit dem die Funktionalität des Bootladers realisiert ist. Darüber hinaus betrifft die Erfindung auch ein Computerprogrammprodukt, insbesondere ein Speichermedium, mit einem durch einen Computer ausführbaren derartigen Computerprogramm.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

### Darin zeigen

- FIG 1: ein Automatisierungsgerät mit einem FPGA als Verarbeitungsvorrichtung und einem in mindestens zwei Segmente unterteilten Speicher zur Aufnahme von Steuerungsprogrammen und aktualisierten Steuerungsprogrammen,
- FIG 2: ein Flussdiagramm zur Veranschaulichung eines Verfahrens zum Betrieb des Automatisierungsgerätes und
- FIG 3: eine besondere Ausführungsvariante des Automatisierungsgerätes gemäß FIG 1, bei der der Speicher in mehr als zwei Segmente unterteilt ist.

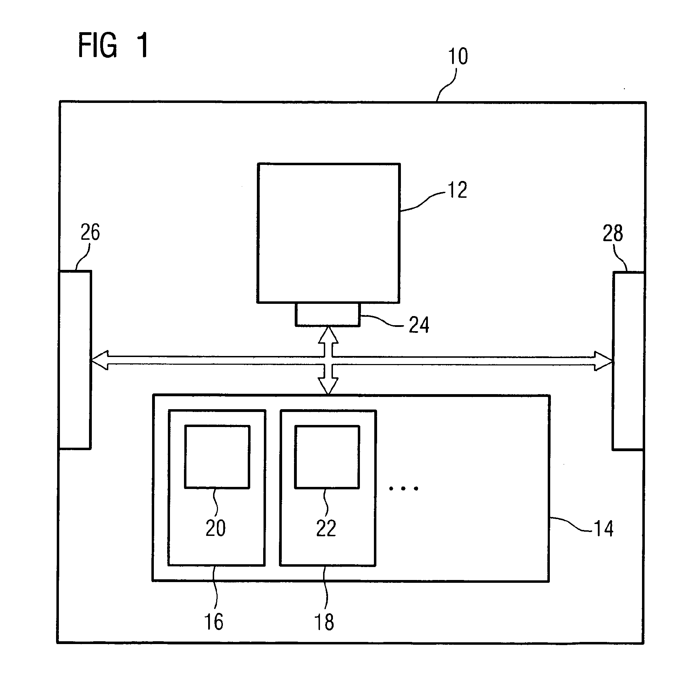

FIG 1 zeigt in schematisch vereinfachter Darstellung ein Automatisierungsgerät 10 mit einem FPGA 12 als Beispiel für eine Verarbeitungsvorrichtung, also eine Vorrichtung, die zur Ausführung von Programmcodeanweisungen bestimmt ist. Neben der Verarbeitungsvorrichtung umfasst das Automatisierungsgerät 10 einen Speicher 14, der in mindestens zwei Segmente 16, 18 - im Folgenden zur Unterscheidung als erstes und zweites Segment 16, 18 bezeichnet - unterteilt ist.

Das erste Segment 16 umfasst Programmcodeanweisungen mit denen ein Bootlader 20 implementiert ist. Das zweite und jedes evtl. weitere Segment 18 steht für ein Steuerungsprogramm 22 zur Verfügung. Zumindest das zweite und jedes evtl. weitere Segment 18 ist ohne Beeinflussung anderer Segmente 16, 18 elektrisch löschbar.

Der FPGA 12 verfügt über mindestens eine Schnittstelle 24, über die z.B. ein Zugriff auf den Speicher 14 und/oder auf eine oder mehrere Automatisierungsgerätschnittstellen 26, 28 möglich ist. Über die Schnittstelle 24 ist der Bootlader 20 oder ein Steuerungsprogramm 22 in den FPGA 12 ladbar. Durch Überwachung einzelner oder sämtlicher Schnittstellen, insbesondere der in FIG 1 einzig dargestellten Schnittstelle 24, besteht von Seiten des FPGA 12 die Möglichkeit, evtl. Kommunikationswünsche, z.B. eine Signalisierung einer Verfügbarkeit einer Aktualisierung für ein Steuerungsprogramm 22, zu erkennen und geeignet zu reagieren.

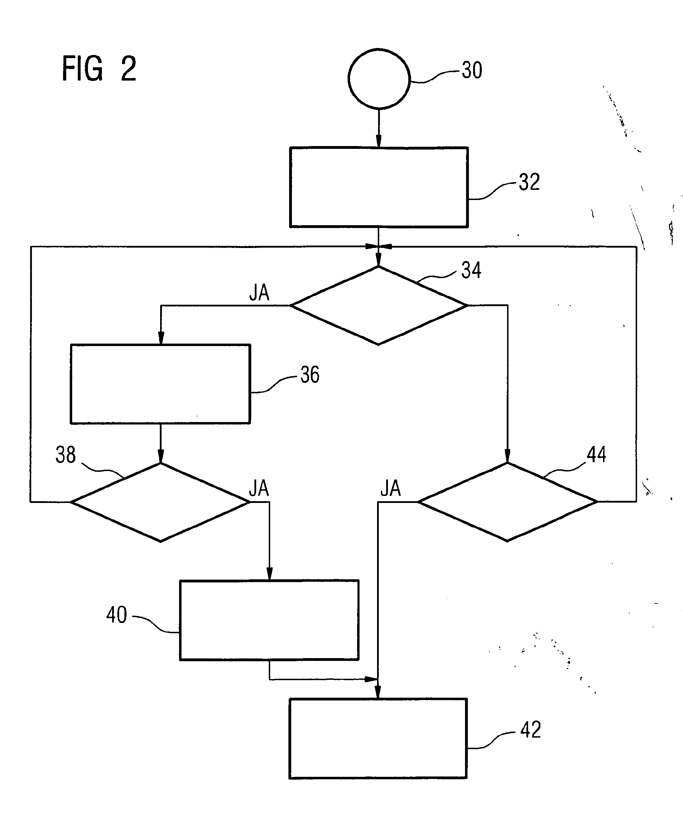

Der Bootlader 20 wird mit der Verfügbarkeit einer Versorgungsspannung für das Automatisierungsgerät 10 in den FPGA 12 geladen und dort zur Ausführung gebracht. Sobald der Bootlader 20 durch den FPGA 12 ausgeführt wird, fungiert er als "Update-Manager" und realisiert in Form eines "Update-Managements" den Ansatz gemäß der vorliegenden Erfindung zur automatischen Aktualisierung von Steuerungsprogrammen 22. Für weitere Details in dieser Hinsicht wird im Folgenden auf FIG 2 Bezug genommen.

FIG 2 zeigt schematisch vereinfacht ein Flussdiagramm zum erfindungsgemäßen Betriebsverfahren, das mit einem ersten Verfahrensschritt 30 immer dann beginnt, wenn für das Automatisierungsgerät 10 (FIG 1) die Versorgungsspannung eingeschaltet wird oder nach einem evtl. Spannungsausfall oder dergleichen wiederkehrt. In einem zweiten Verfahrensschritt 32 wird zunächst der Bootlader 20 (FIG 1) aus dem Speicher 14 (FIG 1) zum FPGA 12 (FIG 1) übertragen und dort zur Ausführung gebracht. In einem dritten Verfahrensschritt 34 wird durch den Bootlader 20 eine evtl. Verfügbarkeit von Aktualisierung für das Steuerungsprogramm 22 (FIG 1) überprüft. Dazu wird die Schnittstelle 24 (FIG 1) des FPGA 12 während einer vorgegebenen oder vorgebbaren Zeitspanne im Hinblick auf ein Signal bezüglich einer Verfügbarkeit eventueller Aktualisierungen für das Steuerungsprogramm 22 überwacht. Liegt ein solches Signal, das z.B. auch ein erstes Datum aus einer Mehrzahl von das aktualisierte Steuerungsprogramm bildenden Daten sein kann, vor, wird unter Kontrolle des Bootladers 20 das zweite Segment 18 (FIG 1) im Speicher 14 elektrisch gelöscht, die an der Schnittstelle 24 anstehenden Daten empfangen und die Daten in das zweite Segment 18 übertragen. Im Einzelnen ist dazu zunächst ein vierter Verfahrensschritt 36 zum Empfangen des aktualisierten Steuerungsprogramms über die Schnittstelle 24 vorgesehen. Die dabei empfangenen Daten können in einem FPGA-RAM (nicht dargestellt), also einem dem FPGA 12 neben dem Speicher 14 direkt, z.B. durch Integration in das Gehäuse des FPGA 12, zugeordneten Speicher, zwischengespeichert werden. Im Anschluss an den Empfang der Daten für das aktualisierte Steuerungsprogramm wird in einem fünften Verfahrensschritt 38 überprüft, ob das aktualisierte Steuerungsprogramm gültig ist. Eine solche Überprüfung würde z.B. fehlschlagen, wenn während des Empfangs des aktualisierten Steuerungsprogramms die Versorgungsspannung ausfällt und das aktualisierte Steuerungsprogramm entsprechend nur unvollständig übertragen wird. Für eine solche Überprüfung kann ein vor der Übertragung über das gesamte aktualisierte Steuerungsprogramm gebildeter Prüfcode, z.B. nach Art eines sog. CRC, zusammen mit dem aktualisierten Steuerungsprogramm übermittelt und bei der Prüfung mit einem über die empfangenen Daten gebildeten Prüfcode verglichen werden. Ergibt sich bei der Prüfung, dass das empfangene aktualisierte Steuerungsprogramm gültig ist, werden in einem sechsten Verfahrensschritt 40 das zur Aufnahme des aktualisierten Steuerungsprogramms vorgesehene Segment im Speicher 14, z.B. das zweite Segment 18, gelöscht und die empfangenen Daten des aktualisierten Steuerungsprogramms dort eingeschrieben. Das jeweilige Segment 18 wird zum Abschluss als ein gültiges Steuerungsprogramm 22 enthaltend markiert.

Steht für den FPGA 12 kein FPGA-RAM zur Verfügung, wird bereits beim Empfang der Daten des aktualisierten Steuerungsprogramms das jeweilige Segment 18 des Speichers 14 zum Zwischenspeichern der Daten verwendet und dazu mit dem Beginn des Empfangs solcher Daten das jeweilige Segment 18 auch gelöscht. Die Prüfung (fünfter Verfahrensschritt 38) bezieht sich dann auf den Inhalt des jeweiligen Segments 18.

In beiden Fällen endet das Verfahren mit einem siebten Verfahrensschritt 42, mit dem das Steuerungsprogramm 22 in den FPGA 12 geladen und aktiviert wird. Mit der Aktivierung des Steuerungsprogramms 22 wird dieses durch den FPGA 12 ausgeführt und das Automatisierungsgerät 10 arbeitet insgesamt mit dem auf die oben beschrieben Art und Weise aktualisierten Steuerungsprogramm 22.

Wenn bei der Prüfung der Übertragung (fünfter Verfahrensschritt 38) erkannt wird, dass die empfangenen Daten kein gültiges Steuerungsprogramm darstellen, wird zum Beginn des Verfahrens, genauer vor den dritten Verfahrensschritt 34, verzweigt und eine evtl. erneute Übertragung eines Steuerungsprogramms abgewartet.

Wird, entweder unmittelbar im Anschluss an den zweiten Verfahrensschritt 32 oder nach einer fehlgeschlagenen Prüfung im fünften Verfahrensschritt 38, bei der erstmaligen oder wiederholten Ausführung des dritten Verfahrensschritts 34 während der vorgegebenen oder vorgebbaren Zeitspanne kein Signal bezüglich der Verfügbarkeit einer eventuellen Aktualisierungen eines Steuerungsprogramms erkannt, wird zu einem achten Verfahrensschritt 44 verzweigt, in dem geprüft wird, ob im Speicher 14, insbesondere in dessen zweitem Segment 18, ein gültiges Steuerungsprogramm 22 verfügbar ist. Ist dies nicht der Fall - erkennbar z.B. an der Kennung (nicht dargestellt), mit der das jeweilige Segment 18 als ein gültiges Steuerungsprogramm 22 enthaltend markiert ist - wird, wie im Anschluss an eine fehlgeschlagene Prüfung im fünften Verfahrensschritt 38, vor den dritten Verfahrensschritt 34 verzweigt und eine evtl. Übertragung eines Steuerungsprogramms abgewartet. Liegt dagegen ein gültiges Steuerungsprogramm 22 vor, wird zum siebten Verfahrensschritt 42 verzweigt und das bereits im Speicher 14 vorhanden gewesene Steuerungsprogramm 22 in den FPGA 12 geladen und aktiviert.

Es wird also nach dem in FIG 2 dargestellten Verfahren in jedem Fall zunächst geprüft, ob ein aktualisiertes Steuerungsprogramm vorliegt. Ist dies der Fall wird das aktualisierte Steuerungsprogramm in den Speicher 14 übernommen und von dort zur Ausführung aktiviert. Liegt kein aktualisiertes Steuerungsprogramm vor, wird der Speicher 14 auf das Vorhandensein eines gültigen Steuerungsprogramms 22 überprüft und dieses im Erfolgsfalle zur Ausführung aktiviert. Liegt weder ein aktualisiertes noch ein gültiges Steuerungsprogramm 22 vor, wird auf die Verfügbarkeit eines aktualisierten Steuerungsprogramms gewartet. Kommt es bei der Übernahme eines aktualisierten Steuerungsprogramms in den Speicher 14 zu einem Fehler, wird das empfangene Steuerungsprogramm nicht als gültiges Steuerungsprogramm 22 angesehen und ebenfalls auf die Verfügbarkeit eines aktualisierten Steuerungsprogramms gewartet. Insgesamt ist gewährleistet, dass nach Einschalten des Automatisierungsgerätes 10 einerseits niemals ein veraltetes Steuerungsprogramm ausgeführt wird und andererseits evtl. aktualisierte Steuerungsprogramme transferierbar sind.

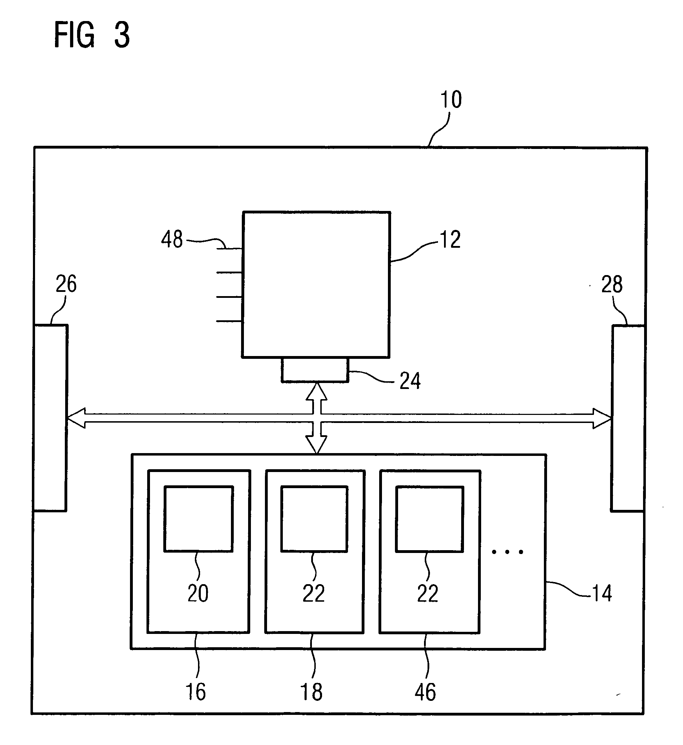

FIG 3 zeigt eine Variante des Automatisierungsgeräts 10 gemäß FIG 1 bei dem der Speicher 14 neben dem ersten und zweiten Segment 16, 18 zumindest ein weiteres Segment 46, ggf. eine Mehrzahl weiterer Segmente (nicht separat dargestellt), umfasst. Das zweite und das oder jedes weitere Segment 18, 46 kann jeweils ein Steuerungsprogramm 22 aufnehmen. Das Empfangen eines aktualisierten Steuerungsprogramms erfolgt grundsätzlich entsprechend dem anhand von FIG 2 beschriebenen Verfahren. Zur Auswahl, ob beim Empfang eines aktualisierten Steuerungsprogramms die davon umfassten Daten in das zweite Segment 18 oder das weitere Segment 46 oder eines der evtl. nochmals weiteren Segmente geschrieben wird (FIG 2: sechster Verfahrensschritt 40, analog), ist vorgesehen, dass die empfangenen Daten diesbezügliche Informationen umfassen und vom dem Bootlader 20 ausgewertet werden. Bei einer Mehrzahl von gültigen Steuerungsprogrammen 22 in einem der im Speicher 14 gebildeten Segmente 18, 46 kann eine Auswahl eines Steuerungsprogramms 22 zur Ausführung durch den FPGA 12 (FIG 2: siebter Verfahrensschritt 42, analog) durch diesbezügliche Signale an einem oder mehreren Eingängen 48 des FPGA 12 bewirkt werden.

Insgesamt ermöglicht die vorliegende Erfindung damit eine Update-fähige FPGA Lösung, die nur einen Speicherbaustein 14 und keinen Mikrocontroller benötigt. Dies ermöglicht einfachere und kostengünstigere Lösungen. Weiterhin kann bei bestimmten Konstellationen, insbesondere Verfügbarkeit eines FPGA-RAMs, sichergestellt werden, dass auch nach einer Unterbrechung des Update-Vorgangs immer ein gültiges Steuerungsprogramm 22 vorhanden ist.

Damit lässt sich eine bevorzugte Ausführungsform der Erfindung kurz wie folgt darstellen:

Es wird ein Verfahren zum Betrieb eines Automatisierungsgeräts 10 angegeben, wobei in einem dem Automatisierungsgerät 10 zugeordneten Speicher 14 zumindest zwei unabhängig lösch-und beschreibbare Segmente 16, 18 gebildet sind und wobei in einem ersten Segment 16 ein Bootlader 20 vorgehalten wird, der mit Verfügbarkeit einer Betriebsspannung für das Automatisierungsgerät 10 durch einen davon umfassten, als Verarbeitungsvorrichtung fungierenden FPGA 12 ausgeführt wird, wobei unter Kontrolle des Bootladers 20 eine Verfügbarkeit einer evtl. Aktualisierung eines durch die Verarbeitungsvorrichtung ausführbaren Steuerungsprogramms 22 überprüft und ggf. in das zweite Segment 18 geladen sowie anschließend zur Ausführung aktiviert wird und wobei ohne Verfügbarkeit einer solchen Aktualisierung des zweite Segment 18 auf das Vorhandensein eines gültigen Steuerungsprogramms 22 überprüft und ein solches zur Ausführung aktiviert wird.

## Patentansprüche

1. Verfahren zum Betrieb eines Automatisierungsgeräts (10), welches eine Verarbeitungsvorrichtung zur Ausführung von Programmcodeanweisungen zumindest eines Bootladers (20) und eines Steuerungsprogramms (22) und einen elektrisch löschbaren Speicher (14) umfasst,
**dadurch gekennzeichnet,**
**dass** der Speicher (14) in mindestens zwei Segmente - erstes und zweites Segment (16, 18) - unterteilt ist,
**dass** das erste Segment (16) Programmcodeanweisungen für den Bootlader (20) umfasst,
**dass** der Bootlader (20) in die Verarbeitungsvorrichtung geladen und ausgeführt wird,
**dass** der Bootlader (20) eine Verfügbarkeit eventueller Aktualisierungen für das Steuerungsprogramm (22) prüft und
**dass** der Bootlader (20) im Falle einer solchen Verfügbarkeit das aktualisierte Steuerungsprogramm (22) in das zweite oder ein weiteres Segment (18) lädt.

2. Betriebsverfahren nach Anspruch 1,
wobei der Bootlader (20) bei der Prüfung auf eine Verfügbarkeit eventueller Aktualisierungen für das Steuerungsprogramm (22) während einer vorgegebenen oder vorgebbaren Zeitspanne mindestens eine Schnittstelle (24) der Verarbeitungsvorrichtung im Hinblick auf ein Signal bezüglich einer Verfügbarkeit eventueller Aktualisierungen für das Steuerungsprogramm (22) überwacht.

3. Betriebsverfahren nach Anspruch 2,
wobei der Bootlader (20) im Falle eines Signals bezüglich einer Verfügbarkeit eventueller Aktualisierungen für das Steuerungsprogramm (22) das zweite oder ein weiteres Segment (18) elektrisch löscht, über die Schnittstelle (24) Daten zur Aktualisierung des Steuerungsprogramms (22) empfängt und die Daten in das zweite oder ein weiteres Segment (18) überträgt.

4. Betriebsverfahren nach Anspruch 3,
wobei der Bootlader (20) im Anschluss an eine erfolgreiche Übertragung der Daten zur Aktualisierung des Steuerungsprogramms (22) in das zweite oder ein weiteres Segment (18) das jeweilige Segment als das aktuell gültige Steuerungsprogramm (22) enthaltend markiert.

5. Betriebsverfahren nach einem der Ansprüche 2 bis 4,
wobei der Bootlader (20) nach Verstreichen der vorgegebenen oder vorgebbaren Zeitspanne während derer die Schnittstelle (24) im Hinblick auf ein Signal bezüglich einer Verfügbarkeit eventueller Aktualisierungen für das Steuerungsprogramm (22) überwacht wird, das zweite oder jedes weitere Segment (18) auf eine Verfügbarkeit eines gültigen Steuerungsprogramms (22) überprüft und im Falle einer solchen Verfügbarkeit das jeweilige Segment als das aktuell gültige Steuerungsprogramm (22) enthaltend markiert.

6. Betriebsverfahren nach Anspruch 4 oder 5,
wobei aus dem Segment, das als das aktuell gültige Steuerungsprogramm (22) enthaltend markiert ist, das jeweilige Steuerungsprogramm (22) in die Verarbeitungsvorrichtung geladen und ausgeführt wird.

7. Betriebsverfahren nach einem der Ansprüche 3 bis 6,
wobei im Falle eines Speichers (14) mit mehr als zwei Segmenten (16, 18) das jeweilige Segment (18) zum Laden des Steuerungsprogramms (22) durch den Bootlader (20) anhand von von den über die Schnittstelle (24) empfangenen Daten umfassten Informationen ausgewählt wird.

8. Betriebsverfahren nach Anspruch 6,
wobei im Falle eines Speichers (14) mit mehr als zwei Segmenten (16, 18) aus einer evtl. Mehrzahl von Segmenten die als das aktuell gültiges Steuerungsprogramm (22) enthaltend markiert sind, eines der Segmente durch an die Verarbeitungsvorrichtung angelegte Signale ausgewählt wird und das jeweilige Steuerungsprogramm (22) in die Verarbeitungsvorrichtung geladen und ausgeführt wird.

9. Betriebsverfahren nach einem der vorangehenden Ansprüche,
wobei als Verarbeitungsvorrichtung zur Ausführung von Programmcodeanweisungen zumindest eines Bootladers (20) und eines Steuerungsprogramms (22) ein FPGA-Baustein (12) fungiert.

10. Computerprogramm mit durch einen Computer ausführbaren Programmcodeanweisungen zur Implementierung des Verfahrens nach einem der Ansprüche 1 bis 8 wenn das Computerprogramm auf einem Computer ausgeführt wird.

11. Computerprogrammprodukt, insbesondere Speichermedium, mit einem durch einen Computer ausführbaren Computerprogramm gemäß Anspruch 10.
